# EUROPEAN PATENT APPLICATION

(11) **EP 1 845 301 A2**
(43) Date of publication of application: **17.10.2007**
(21) Application number: 07251590.1
(22) Date of filing: 13.04.2007
(51) Int. Cl.: F16M 11/04, F16M 11/18

(54) **Display extension apparatus**

(30) Priority: 13.04.2006 KR 20060033453
(71) Applicant: Samsung Electro-Mechanics Co., Ltd, Suwon Gyunggi-do 443-743 (KR)
(72) Inventor: Choi, Dong-Won 103-904 Woncheon Jugong 1 danji, Gyeonggi-do 443-755 (KR); Kim, Jae-Kyung, Ansan-si, Gyeonggi-do 426-150 (KR); Lee, Chil-Sung, Suwon-si, Gyeonggi-do 441-758 (KR); Park, Kyoung-Shin 208-604 Woncheon Jugong 2 danji, Suwon-si, Gyeonggi-do 443-756 (KR)
(74) Representative: Mounteney, Simon James

(57) **Abstract**

The present invention relates to a display extension apparatus. The display extension apparatus includes a fixed body (11), a link portion (10) having one end coupled to a fixed body (11); a movable body (12) coupled to the other end of the link portion (10), and a driving part coupled to the joining point of the link portion (10), wherein the driving part includes a motor unit and a rotary part coupled to the driving shaft of the motor unit, the rotary part including a clutch coupled to the driving shaft and a driven shaft positioned in contact with the clutch, and wherein the driving force of the motor unit is smaller than the frictional force between the driven shaft and the clutch.

## Description

### Field of the Invention

The present invention relates to a display extension apparatus.

### Background of the Invention

Flat panel displays encompass a number of technologies, such as Liquid Crystal Displays (LCDs), Plasma Display Panels (PDPs), and Light Emitting Diode (LED) displays, that are now commonly applied to televisions and video displays.

Flat panel displays are gradually replacing Cathode Ray Tubes (CRTs) monitors or televisions for reasons that flat panel displays are much lighter and thinner thereby providing the advantage of space saving.

LCD TV and PDP TV are also commonly installed or mounted on a wall - often referred to as "wall mounted TV" - to provide a wide viewing angle for the viewers. However, when the TV is installed on the wall, the viewer might not obtain a good view of the screen as he moves to different locations in a room. Due to the narrow distance between the back of the wall mounted TV and the wall, it is difficult to adjust the direction of orientation of the TV screen to accommodate the viewer's position. One way of solving this problem is to permanently increase the distance between the back of the TV and the wall. However, this would then defeat the advantage of space saving provided by the wall mounted TV.

### Summary of the Invention

An object of the present invention is to provide a display extension apparatus which allows a maximum viewing angle even when the location of a viewer is changed, while providing the advantageous space saving provided by flat panel displays.

One aspect of the present invention provides a display extension apparatus that includes a fixed body, a link portion having one end coupled to a fixed body, a movable body coupled to the other end of the link portion, and a driving part coupled to the joining point of the link portion, wherein the driving part includes a motor unit, and a rotary part coupled to the driving shaft of the motor unit, wherein the rotary part includes a clutch coupled to the driving shaft, and a driven shaft positioned in contact with the clutchsuch that the driving force of the motor unit is smaller than the frictional force between the driven shaft and the clutch.

The frictional force between the driven shaft and the clutch may be smaller than the cogging torque of the motor unit. The display extension apparatus may further include one or more washers interposed between the clutch and driven shaft.

The link portion may include a first hinge member coupled to the fixed body, a second hinge member coupled to the movable body, a first link element having one end rotatably coupled to the first hinge member, and a second link element having one end rotatably coupled to the second hinge member.

The motor unit may be coupled to the first hinge member or the second hinge member, and the rotary part may be coupled to the first link element or the second link element, with the first link element and the second link element coupled in correspondence with the first hinge member and the second hinge member, respectively.

The link portion may include a first guide member coupled to the fixed body while separated from the first hinge member, and a second guide member coupled to the movable body while separated from the second hinge member, wherein the first link element and the second link element intersect, and the other end of the first link element may be movably attached along the second guide element, and the other end of the second link element may be movably attached along the first guide element.

The driving part may be coupled to the part where the first link element and the second link element intersect, the motor unit may be coupled to the first link element or the second link element, and the rotary part may be coupled to that one of the first link element and the second link element to which the motor unit is not coupled.

The link portion may include a third hinge member coupled to the fixed body while separated from the first link element, a fourth hinge member coupled to the movable body while separated from the second link element, a third link member having one end rotatably coupled to the other end of the first link member with an interposed fifth hinge member and having the other end rotatably coupled to the fourth hinge member, and a fourth link member having one end rotatably coupled to the other end of the second link member with an interposed sixth hinge member and having the other end rotatably coupled to the third hinge member.

The display extension apparatus may further include a first gear coupled to the outer perimeter of the first hinge member, and a second gear coupled the first gear and the outer perimeter of the third hinge member. The first gear and the second gear may be coupled by an even number of idle gears. The rotary part may be coupled to the first gear or the second gear.

Another aspect of the present invention provides a display extension apparatus that includes a fixed body, a link portion which includes a first link arm and a second link arm respectively having one end coupled to the fixed body, a movable body coupled to the other end of the first link arm or the second link arm, and a driving part coupled to the first link arm or the second link arm, wherein the driving part includes a motor unit coupled to the first link arm or the second link arm, a driving shaft having one end coupled to the motor unit to rotate, a pipe having a through hole with the other end of the driving shaft inserted through one side of the though hole, and a fixed shaft having one end inserted through the other side of the through hole and having the other end coupled to the first link arm or the second link arm in correspondence with the motor unit.

The one side of the through hole and the other end of the rotary shaft may be coupled by guide-joining or screw-joining, and the other side of the through hole and the one end of the fixed shaft may be coupled by guide-joining or screw-joining in correspondence with the joining of the one side of the through hole and the other end of the rotary shaft.

Another aspect of the present invention provides a display extension apparatus that includes a fixed body, a link portion having one end coupled to the fixed body, a movable body coupled to the other end of the link portion, and a driving part coupled to the joining point of the link portion, wherein the driving part includes a motor unit and a rotary part coupled to the driving shaft of the motor unit, and the rotary part includes a clutch coupled to the driving shaft and a driven shaft positioned in contact with the clutch, and wherein the driving force of the motor unit is smaller than the frictional force between the driven shaft and the clutch.

The frictional force between the clutch and driven shaft is smaller than the cogging torque of motor unit, to prevent the motor unit from rotating when the driven shaft is rotated forcibly. One or more washers may be positioned between the clutch and the driven shaft to maintain a constant frictional force.

Another aspect of the present invention provides a display extension apparatus having a safety unit for preventing excessive loads on the motor not only when operated automatically but also when operated manually.

### Brief description of the drawings

These and/or other aspects and advantages of the present general inventive concept will become apparent and more readily appreciated from the following description of the embodiments, taken in conjunction with the accompanying drawings of which:
Fig. 1a is a plan view of a display extension apparatus in accordance with a first embodiment of the present invention.
Fig. 1b is a magnified sectional view of an intersection of a display extension apparatus of Fig. 1a.
Fig. 1c illustrates the operation of a display extension apparatus in accordance with a first embodiment of the present invention;
Fig. 2a is a plan view of a display extension apparatus in accordance with a second embodiment of the present invention;
Fig. 2b illustrates the operation of a display extension apparatus in accordance with a second embodiment of the present invention;
Fig. 3a is a plan view of a display extension apparatus in accordance with a third embodiment of the present invention;
Fig. 3b illustrates the operation of a display extension apparatus in accordance with a third embodiment of the present invention;
Fig. 4a is a plan view of a display extension apparatus in accordance with a fourth embodiment of the present invention;
Fig. 4b illustrates the operation of a display extension apparatus in accordance with a fourth embodiment of the present invention;
Fig. 5 is a plan view of a display extension apparatus in accordance with a fifth embodiment of the present invention;
Fig. 6 is a cross-sectional view of a rotary part of a driving part in accordance with a sixth embodiment of the present invention;
Fig. 7a is a plan view of a display extension apparatus in accordance with a seventh embodiment of the present invention;
Fig. 7b is a cross-sectional view of a pipe of a display extension apparatus in accordance with a seventh embodiment of the present invention;
Fig. 7c is a cross-sectional view across the dashed section A in Fig. 7b.

### Detailed Description

The descriptions set forth below merely illustrate the principles of the present invention. Therefore, those skilled in the art could devise various methods and apparatus thereof which realise the principles of the present invention and which do not depart from the scope of the present invention. Also, it is to be appreciated that not only the principles, viewpoints, and embodiments of the present invention, but all detailed descriptions listing the particular embodiments are intended to include structural and functional equivalents.

Other objectives, particular advantages, and novel features of the present invention will further be clarified by the detailed descriptions and preferred embodiments set forth below with reference to the accompanying drawings. In describing the invention, detailed explanation of the prior art will be omitted when it is deemed to unnecessarily obscure the crux of the invention. Numerals used in the description (for example, a first, a second, etc.) are merely used to distinguish equal or similar items in an ordinal manner.

Hereinafter, embodiments of the invention will be described in detail with reference to the accompanying drawings.

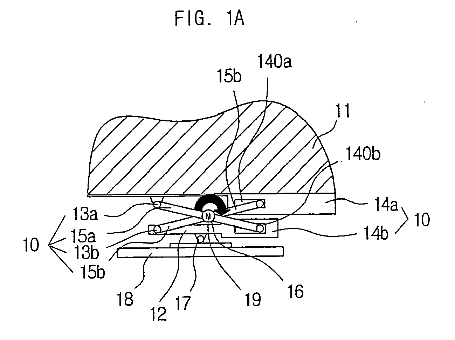

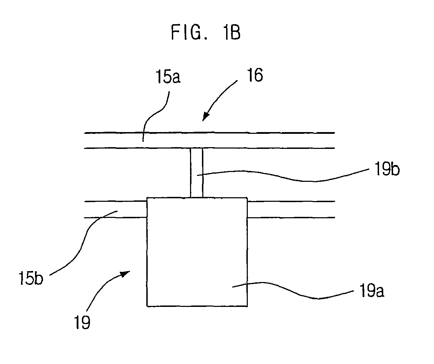

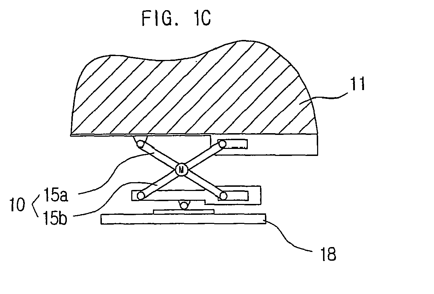

Fig. 1a is an illustration of a display extension apparatus in accordance with a first embodiment of the present invention. Fig. 1b is a magnified sectional view of an intersection of the display extension apparatus of Fig. 1a. Fig. 1c illustrates the operation of a display extension apparatus in accordance with a first embodiment of the present invention. Figs 1a to 1c illustrate a link portion 10a, fixed body 11, a movable body 12, a first hinge member 13a, a second hinge member 13b, a first guide member 14a, a second guide member 14b, a first link member 15a, a second link member 15b, a intersection portion 16, a universal joint 17, a display 18, a driving part 19, a motor unit 19a, and a rotary part 19b.

In the present embodiment the fixed body 11, for supporting the link portion 10 and the movable body 12, is shown in an arbitrary form in the drawings and descriptions, it would be appreciated by the person skilled in the art that the support may include any form of medium such as anchor bolts, brackets, braces, or plates that can be used for coupling between the link portion 10 and a wall, and so on. The fixed body 11 must be sufficiently strong to sustain the total weight of the link portion 10, the movable body 12, and the display 18.

The link portion 10 includes a first hinge member 13a, a second hinge member 13b, a first guide member 14a, a second guide member 14b, a first link member 15a, a second link member 15b and an intersection portion 16.

The first hinge member 13a is coupled to the fixed body 11 and one end of the first link element 15a is movably attached to the first hinge member 13a. The first guide member 14a is coupled to the fixed body 11 at a point separated from the first hinge member 13a. A slot 140a is formed in the first guide member 14a and the second link element 15b is movably attached to the slot 140a, so as to enable linear movements of the second link element 15b.

The second link member 15b is pivotally connected to the first link member 15a at the intersection portion 16. The intersection portion 16 is located at the middle section of the first link member 15a and the second link member 15b. The driving part 19 is coupled to the intersection 16 such that movements of the first and the second link members 15a, 15b are rotatable by driving part 19.

The other end of the first link member 15a is coupled with a slot 140b of a second guide member, so as to move rectilinearly, and the other end of the second link member 15b is movably attached to the movable body 12.

As shown in Fig 1a, the second guide member 14b may be formed as a single body with the movable body 12 or may also be joined as a separate body. The universal joint 17 is coupled to the movable body 12, and the display 18 is joined to the universal joint 17 so as to enable movements of the display 18.

Fig. 1b is a magnified sectional view of the intersection 16 in Fig. 1a. At the intersection portion 16, a rotary part 19b of the driving part 19 is coupled to the first link member 15a, and the motor unit 19a of the driving part 19 is coupled to the second link member 15b. Thus, the rotation of the rotary part 19b causes the first link member 15a and second link member 15b to rotate about the intersection portion 16, the movable body 12 coupled to the link portion 10 can be moved towards or away from the fixed body 11 as in shown Fig. 1c. In an alternative arrangement, the motor unit 19a may be coupled to the first link member 15a, and the rotary part 19b may be coupled to the second link member 15b.

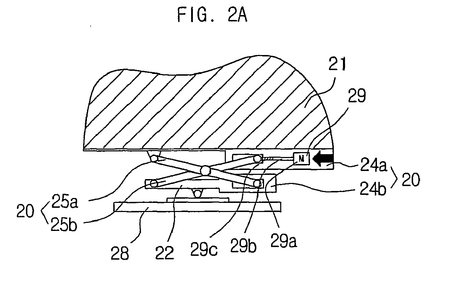

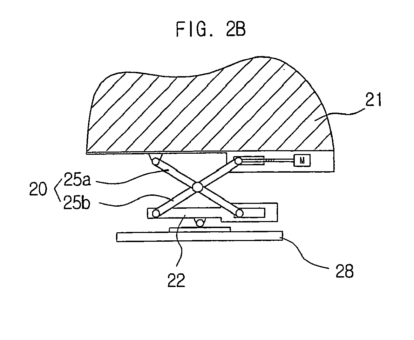

Fig. 2a is a plan view of a display extension apparatus in accordance with a second embodiment of the present invention. Fig. 2b is an illustration of a display extension apparatus in operation in accordance with a second embodiment of the present invention. The display extension apparatus according to a second embodiment of the present invention has a similar structure to the first embodiment, except that the second embodiment includes a driving part 29. Accordingly, these differences are explained below.

In this embodiment, the driving part 29 includes a motor unit 29a and an extension part 29c coupled to a driving shaft 29b of the motor unit 29a. The extension part 29c can be extended or retracted in a longitudinal direction according to the rotational direction of the driving shaft 29b . As illustrated in Fig 2a, the motor unit 29 is coupled to a first guide member 24a, and is coupled to one end of a second link member 25b. As the driving shaft 29b rotates, the extension and retraction of the extension part 29c result in one end of the second link element 25b being moved rectilinearly, thereby moving the whole link portion 20. In an alternative arrangement, the motor unit 29 may also be coupled to the second guide member 24b. Fig. 2b illustrates the an extended link portion 20 in an extended position.

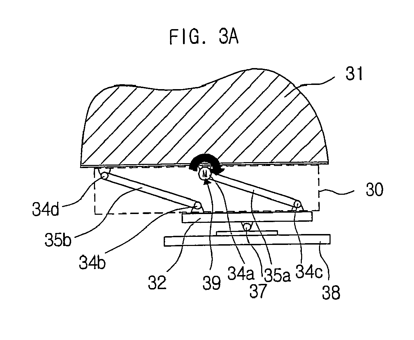

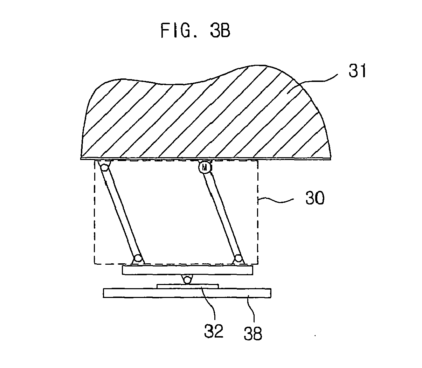

Fig. 3a is a plan view of a display extension apparatus in accordance with a third embodiment of the present invention. Fig. 3b illustrates the operation of a display extension apparatus in accordance with a third embodiment of the present invention. Referring to Figs. 3a to 3b, a link portion 30, a fixed body 31, a movable body 32, a first hinge part 34a, a second hinge part 34b, a third hinge part 34c, a fourth hinge part 34d, a first link member 35a, a second link member 35b, a universal joint 37, a display 38, and a driving part 39 are illustrated.

In the present embodiment, the first link member 35a and second link member 35b are movably attached to the movable body 32 and the fixed body 31. The hinge parts 34a-34d and the link members 35a, 35b enable the movable body 32 to move toward or away from the fixed body 31 in a swinging motion.

Meanwhile, the driving part 39 is coupled to one of the four hinge parts 34a-34d. The driving part 39 includes a motor unit 19a and a rotary part 19b similar to those illustrated in Fig. 1b. The first link member 35a and the second link member 35b are rotated freely through the rotational force of the rotary part 19b. While in this embodiment the driving part 39 is coupled to the first hinge member 34a, other arrangements, such as connecting the driving part 39 with other hinge members 34b-34d are also possible.

Fig. 3b illustrates the first and second link members 35a, 35b in the extended position. The functions of the other components in this embodiment are similar to those described in the first embodiment.

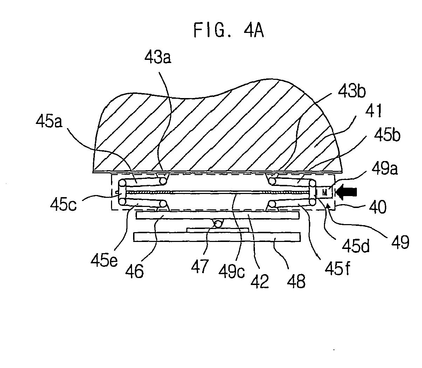

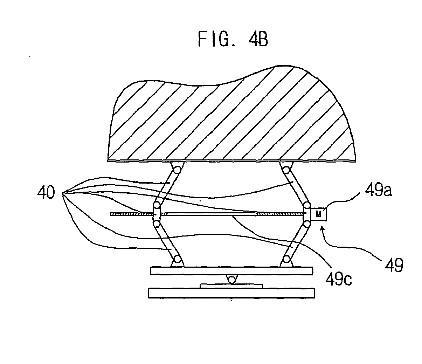

Fig. 4a is a plan view of a display extension apparatus in accordance with a fourth embodiment of the present invention. Fig. 4b illustrates the operation of a display extension apparatus in accordance with a fourth embodiment of the present invention. Referring to Figs. 4a to 4b, a link portion 40, a fixed body 41, a movable body 42, a first hinge member 43a, a second hinge member 43b, a first link member 45a, a second link member 45b, a third link member 45c, a fourth link member 45d, a fifth link member 45e, a sixth link member 45f, a universal joint 47, a display 48, a driving part 49, a motor unit 49a, and a worm gear member 49c are illustrated.

In the present embodiment, the first and second hinge members 43a, 43b are coupled to the fixed body 41. One end of the first link element 45a is coupled to the first hinge member 43a. Similarly, one end of the second link element 45b is coupled to the second hinge member 43b. As shown in Figure 4A, the other ends of the first and second link members 45a, 45b are respectively movably coupled to one end of the third and fourth link members 45c, 45d. In turn, the other end of the third and fourth link member 45c, 45d are respectively movably coupled to one end of the fifth and sixth link members 45e, 45f. The other end of the fifth and sixth link members 45e, 45f are in turn coupled to the movable body 42.

In the present embodiment, the driving part 49 includes a motor unit 49a, rotary part (not shown) and a worm gear member 49c. The motor unit 49a is attached to the fourth link member 45d, and the worm gear member 49c is coupled through the third link member 45c as a threaded tube. In accordance with the rotation direction of the worm gear member 49c powered by the rotary part (not shown), the third link member 45c and the fourth link member 45d are capable of moving toward or away from each other. Consequently, the link portion 40 can be extended or retracted. Fig. 4b illustrates the link portion 40 being extended as the third link member 45c and the fourth link member 45d are drawn toward each other. In addition, the same function can also be achieved in the case where the motor unit 49a is fixed to the third link member 45c and the worm gear member 49c is coupled to the fourth link member 45d. The functions of other components in this embodiment are similar to those of the first embodiment, and will not be described in further detail herein.

Although six link members are utilised in this embodiment, alternative configurations may also be used. For example, four link members may be movably attached in a rhombus shape, and the link element facing each other may be joined with a driving part 49 and a worm gear member 49c.

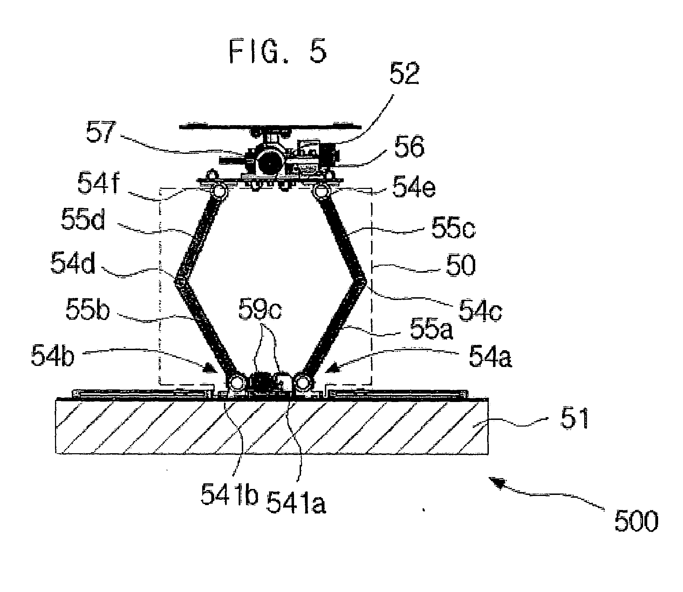

Fig. 5 is a plan view of a display extension apparatus in accordance with a fifth disclosed embodiment of the present invention. Referring to Fig. 5, a link portion 50, a fixed body 51, a movable body 52, a first hinge member 54a, a second hinge member 54b, a third hinge member 54c, a fourth hinge member 54d, a fifth hinge member 54e, a sixth hinge member 54f, a first link member 55a, a second link member 55b, a third link member 55c, a fourth link member 55d, a universal joint 57, a idle gear 59c, and a display extension apparatus 500 as illustrated.

The display extension apparatus uses two pairs of link members in this embodiment. One end of the first link member 55a and one end of the second link member 55b are movably attached to the first and second hinge members 54a, 54b respectively. As shown in Fig. 5, the first and second hinge members 54a, 54b are coupled to the fixed body 51. The other end of the first link member 55a and the other end of the second link member 55b are respectively coupled to one end of the third link member 55c and one end of the fourth link member 55d respectively. The other end of each of the third link member 55c and fourth link member 55d is movably coupled to the the movable body 52.

While the link members are driven by the driving part coupled to one of the hinge members 54a-f, in the present embodiment, an even number of idle gears 59c are coupled between the first gear 541a and the second gear 541b, connected between the first hinge member 54a and second hinge member 54b. The driving part is coupled to any one of the first gear 541a, the second gear 541b, and the even number of idle gears 59c, to supply power thereto.

The even number of idle gears 59c operate the link members smoothly by alternating the rotation direction of the first gear 541a and the second gear 541b, and to prevent excessively high loads in one link member by driving the first and second link members 55a, 55b with the same force.

In the present embodiment, the first gear 541a and second gear 541b are respectively coupled to the first hinge member 54a and the second hinge member 54b, and the even number of idle gears 59c and the driving part 59 are coupled between them. For an alternative arrangement, they may also be coupled to the fifth the hinge member 54e and sixth hinge member 54f in the same manner. It would be appreciated by the person skilled in the art that if the first gear 541a is engaged with the second gear 541b directly, the link members may be driven without an idle gear 59c.

The functions of other components in this embodiment are similar to those of the first embodiment and will not be described in further detail herein.

The embodiments described above relate to automatic modes of controlling the display extension apparatus using a controller, such as a remote controller. The term "Automatic" in the present invention refers to the display extension apparatus driven by a motor that responds to an external control signal. However, the extension of the display may also be achieved manually, and rotation of the display using an external force may damage the rotor of the motor. Therefore, the structure of the driving part to prevent this damage, particularly that of the rotary part, will be described below in more detail.

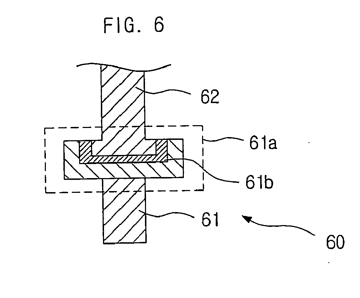

Fig. 6 is a cross-sectional view of a rotary part of a driving part in accordance with a sixth embodiment of the present invention. Referring to Fig. 6, a rotary part 60, a driving shaft 61, a clutch part 61a, and a driven shaft 62 are illustrated.

In the present invention, the rotary part of the driving part may be applied to any of the first to fifth embodiments. The driving shaft 61 in Fig. 6, joined to the motor unit 19a of the driving part 10 of Fig. 1b, serves as the rotational axis of the motor. The driving shaft 61 is coupled to the driven shaft 62 at the clutch part 61 a. As shown in Fig. 6, the clutch part 61 a, which controls the frictional force, may be formed as a single body as the driving shaft 61. In addition, it may be coupled to the driven shaft 62. A washer 61b interposed between the clutch part 61 a and the driven shaft 62 keeps the frictional force constant.

The operation of the rotary part 60 may be described as follows: the driving force of the motor for the link portion in the first to fifth embodiments is smaller than the frictional force of the clutch part 61b, such that slipping between the clutch part 61a and the driven shaft 62 will not occur. However, in the case where external forces forcibly moves the link portion to rotate the driven shaft 62, slipping will occur. This is because the frictional force of the clutch part 61a is smaller than the cogging torque of the motor. Consequently, the possibility of forced rotation of the motor by external force is reduced.

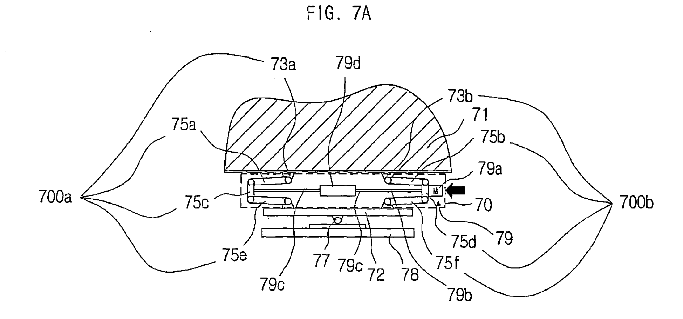

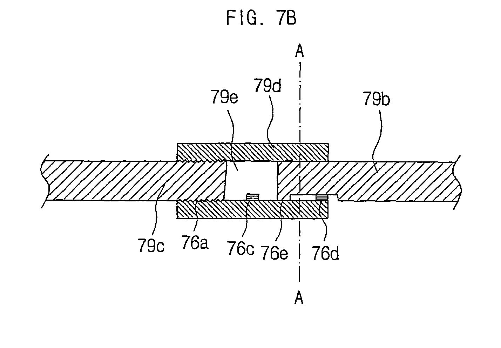

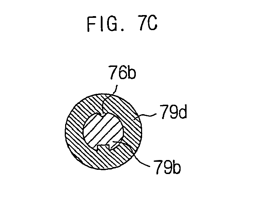

Fig. 7a is a plan view of a display extension apparatus in accordance with a seventh embodiment of the present invention. Fig. 7b is a cross-sectional view of a pipe of a display extension apparatus in accordance with a seventh disclosed embodiment of the present invention. Fig. 7c is a cross-sectional view across the dashed section A in Fig. 7b. Referring to Figs. 7a-c, a link portion 70, a first link arm 700a, a second link arm 700b, a fixed body 71, a movable body 72, a first hinge member 73a, a second hinge member 73b, a first link member 75a, a second link member 75b, a third link member 75c, a fourth link member 75d, a fifth link member 75e, a sixth link member 75f, a screw thread 76a, a first stopping projection 76c, a second stopping projection 76d, a third stopping projection 76e, a universal joint 77, a display 78, a driving part 79, a motor unit 79a, a driving shaft 79b, a fixing shaft 79c, and a tube 79d are illustrated.

The main parts of the link portion 70 in the present embodiment are the first link arm 700a and the second link arm 700b. The first link arm 700a includes a first hinge member 73a, first link member 75a, third link member 75c, and fifth link member 75e. Second link arm 700b includes second hinge member 73b, second link member 75b, fourth link member 75d and sixth link member 75f.

The first link arm 700a and the second link arm 700b are coupled between the fixed body 71 and the movable body 72. The structure and operation of the first link arm 700a and second link arm 700b is described in detail below.

One end of each of the first link member 75a and the second link member 75b is hinge-joined respectively to the first and second hinge members 73a, 73b, to enable rotation in an arbitrary angle. As shown in Fig. 7A, the other end of the first and second link members 75a and 75b are respectively movably coupled to one end of the third and fourth link members 75c, 75d. In turn, the other end of the third and fourth link member 75c, 75d are respectively movably coupled to one end of the fifth and sixth link members 75e, 75f. The other end of the fifth and sixth link members 75e, 75f are in turn coupled to the movable body 72.

The driving part 79 in the present embodiment includes a motor unit 79a, a driving shaft 79b, a fixing shaft 79c, and a tube 79d. The motor unit 79a is fixed to the fourth link member 75d. The driving shaft 79b rotates with one end coupled to the motor unit 79a. In addition, the other end of the driving shaft 79b is inserted to one side of the through hole 79e in the tube 79d. One end of the fixing shaft 79c is fixed to the third link member 75c and the other end is inserted to the other side of the through hole 79e. As illustrated in Fig. 7b, the connection between the tube 79d and the driving shaft 79b and the connection between the pipe 79d and the fixing shaft 79c may be screw-joining or guide-joining. That is, in the case where the tube 79d and the driving shaft 79b are guide-joined, the tube 79d and the fixing shaft 79c are screw-joined correspondingly.

As illustrated in Fig. 7c, the guide-joining is a configuration that enables the driving shaft 79b to slide in the longitudinal direction of the driving shaft 79b into the tube 79d. However, guide projections 76b are formed in the tube 79d to allow the tube 79d to rotate together with the driving shaft 79b. Due to the slide connection between the tube 79d and the driving shaft 79b, when the link portion 70 is moved manually, the difference in length between the extended and retracted states of the link portion 70 is eliminated by the sliding of the driving shaft 79b in the through hole 79e of the tube 79d.

Meanwhile, the tube 79d and the fixing shaft 79c are screw-joined. The operation of the fixing shaft 79c connected to the tube 79d, and the driving shaft 79b is described below. When the driving shaft 79b is rotated to extend the link portion 70, the pipe 79d and the driving shaft 79b rotate together. The distance between the pipe 79d and the fixing shaft 79c then becomes longer as the screw-joining is unfastened. Therefore, it may be preferable to form a stopping projection 76c to prevent the driving shaft 79b from sliding out of the through hole 79e of the pipe 79d.

On the other hand, a second stopping projection 76d in the through hole 79e and a third stopping projection 76e in the driving shaft 79b prevent the driving shaft 79b from being separated from the through hole 79e when the fixing shaft 79c enters the through hole 79e of the tube 79d as the screw-joining is fastened by the rotation of the driving shaft 79b.

While six link members are utilised in this embodiment, alternative configurations may also be used, such as with four link members hinge joined in a rhombus shape, and with the driving part 79 between the link members, as in Fig. 7a.

According to the present invention set forth as above, rotation of the display is enabled, to separate the display from a fixed body. The separating and rotating actions can be performed automatically or manually. The durability is increased by avoiding excessive loads on the motor even when it is operated manually.

## Claims

1. A display extension apparatus comprising:
a fixed body;
a link portion having one end coupled to the fixed body;
a movable body coupled to the other end of the link portion; and
a driving part coupled to a joining member of the link portion,
wherein the driving part comprises:
a motor unit; and
a rotary part coupled to a driving shaft of the motor unit;
wherein the rotary part comprises:
a clutch coupled to the driving shaft; and
a driven shaft positioned in contact with the clutch,
such that the driving force of the motor unit is smaller than the frictional force between the driven shaft and the clutch.

2. A display extension apparatus in accordance with claim 1, wherein the frictional force between the driven shaft and the clutch is smaller than the cogging torque of the motor unit.

3. A display extension apparatus in accordance with claim 2, wherein the display extension apparatus further comprises one or more washers interposed between the clutch and driven shaft.

4. A display extension apparatus in accordance with claim 1, wherein the link portion comprises:
a first hinge member coupled to the fixed body;
a second hinge member coupled to the movable body;
a first link element having one end rotatably coupled to the first hinge member; and
a second link element having one end rotatably coupled to the second hinge member.

5. A display extension apparatus in accordance with claim 4, wherein the motor unit is coupled to the first hinge member or the second hinge member, and the rotary part is coupled to the first link element or the second link element, the first link element and the second link element coupled in correspondence with the first hinge member and the second hinge member, respectively.

6. A display extension apparatus in accordance with claim 4, wherein the link portion comprises:
a first guide member coupled to the fixed body while separated from the first hinge member; and
a second guide member coupled to the movable body while separated from the second hinge member,
wherein the first link element and the second link element intersect,
and the other end of the first link element is movably attached along the second guide element, and the other end of the second link element is movably attached along the first guide element.

7. A display extension apparatus in accordance with claim 6, wherein the driving part is coupled to the part where the first link element and the second link element intersect, the motor unit is coupled to the first link element or the second link element, and the rotary part is coupled to that one of the first link element and the second link element to which the motor unit is not coupled to.

8. A display extension apparatus in accordance with claim 4, wherein the link portion comprises:
a third hinge member coupled to the fixed body while separated from the first link element;
a fourth hinge member coupled to the movable body while separated from the second link element;
a third link member having one end rotatably coupled to the other end of the first link member with an interposed fifth hinge member and having the other end rotatably coupled to the fourth hinge member; and
a fourth link member having one end rotatably coupled to the other end of the second link member with an interposed sixth hinge member and having the other end rotatably coupled to the third hinge member.

9. A display extension apparatus in accordance with claim 8, further comprising a first gear coupled to the outer perimeter of the first hinge member, and a second gear coupled the first gear and the outer perimeter of the third hinge member.

10. A display extension apparatus in accordance with claim 9, wherein the first gear and the second gear are coupled by an even number of idle gears.

11. A display extension apparatus in accordance with claim 9, wherein the rotary part is coupled to the first gear or the second gear

12. A display extension apparatus comprising:
a fixed body;
a link portion comprising a first link arm and a second link arm respectively having one end coupled to the fixed body;
a movable body coupled to the other end of the first link arm or the second link arm; and
a driving part coupled to the first link arm or the second link arm,
wherein the driving part comprises:
a motor unit coupled to the first link arm or the second link arm;
a driving shaft having one end coupled to the motor unit to rotate;
a tube having a through hole formed therein, the other end of the driving shaft is inserted through one side of the through hole; and
a fixed shaft having one end inserted through the other side of the through hole and having the other end coupled to the first link arm or the second link arm in correspondence with the motor unit.

13. A display extension apparatus in accordance with claim 12, wherein the one side of the through hole and the other end of the rotary shaft are coupled by guide-joining or screw-joining, and the other side of the through hole and the one end of the fixed shaft are coupled by guide-joining or screw-joining in correspondence with the joining of the one side of the through hole and the other end of the rotary shaft.
